# EUROPEAN PATENT SPECIFICATION

(11) **EP 0 420 617 B1**
(45) Date of publication and mention of the grant of the patent: **18.05.1994**
(21) Application number: 90310545.0
(22) Date of filing: 26.09.1990
(51) Int. Cl.: B60J 5/04, B60J 10/04

(54) **Door window cassette for vehicles**
Fenstermodul für Kraftfahrzeugtüre
Module de fenêtre pour porte de véhicule automobile

(30) Priority: 26.09.1989 US 412978
(43) Date of publication of application: 03.04.1991
(73) Proprietor: GENCORP INC., Akron Ohio 44313-3300 (US)
(72) Inventor: Dupuy, Ronald E., Wabash, Indiana 46992 (US)
(74) Representative: Stoner, Gerard Patrick

(56) References cited:
- EP-A- 0 155 641
- FR-A- 2 588 035
- GB-A- 2 191 156

## Description

The present invention relates to a door window cassette for motor vehicles which is expediently fitted within a vehicular door structure as on an assembly line.

Heretofore, automobile door frames and understructures therefor were assembled on the assembly line piecemeal by individually attaching to the door the understructure, the window lifting mechanism, and a plurality of individual window seals. Thereafter, the window regulator or crank mechanism was operatively connected to the lifting mechanism. The procedure was cumbersome and time consuming, especially the installing of the individual seals to the window frames in a piecemeal manner. Quite often gaps between the individual window seals existed which resulted in undesirable water leaks, noises, and the like. More specifically, such gaps were the result of various factors such as the inaccurate formation of the window seal channels, due to stamping or metal bending errors, etc., and prior seals generally did a poor job of covering such imperfections with the result that gaps existed causing undesirable effects such as wind noise, water leakage, etc. Such piece meal seal construction also resulted in a door having poor aesthetics. The problem of wind noise and leakage was particularly evident, for example, near the lower front junction of the window seal, that is the mirror mount area, and also near the lower rear junction of the window, that is the lock area. Attempts have been made in the prior art to solve the above problems through advances in areas such as robotics and lasers as they relate to the finish and assembly of vehicles, but with questionable success.

It would be desirable to provide an integral seal assembly which forms an air tight seal and also covers any stamping or metal bending errors and eliminates the problems associated therewith. The present seal assembly can be readily shaped to any desirable appearance as well as to fit various offsets, indentations, and the like, since the seal may be molded as opposed to the heretofore general approach of extruding various individual seals.

US-A-4,785,585 discloses an integral hardware module including window glass, window tracks and a regulator mechanism, where the module is secured inside the door below the window opening.

Similarly, US-A-4,793,099 discloses a tape driven power window module for raising and lowering a vehicular window, while US-A-4,110,935 suggests a take-up mechanism in a cable actuated window lifting device for automobile side windows.

DE-C-213247 issued January 25, 1961 and BE-A-571753 issued October 31, 1958, both disclose a cable actuated system for raising and lowering automobile windows.

GB-A-2191156 (on which the two-part form of the present claims is based) describes an assembly, insertable into the outer shell of a vehicle body, comprising a windable window guided in a cassette frame of channel section having a seal in the channel of the frame, to seal around the edge of the pane.

The present invention provides a door window cassette for fitting into a vehicle door structure, comprising a frame and seal assembly with a window perimeter channel comprising two side channels and a top channel extending between them, said channels carrying interior seals and exterior seals for sealing against a window pane, characterised in that an external perimeter surface of the top and side channels is surrounded by a peripheral gasket of elastomeric material for sealing the cassette into the vehicle door structure.

Some optional features of the invention are set out in the claims.

In a preferred aspect, there is provided an automobile door glass cassette having a frame and seal assembly for a glass window and a glass regulator assembly secured together as a unit and adapted to be quickly inserted into an automotive door frame on an assembly line. The frame and seal assembly comprises vertical side and top window or glass channels and a lateral guide means located between the side channels. All of the channels are fitted with interior and exterior seals secured adjacent to the glass opening. The door glass cassette assembly further contains a glass regulator assembly secured between the lower part of side channels below the belt line and is operative to raise and lower the glass within the frame and seal assembly. The outer perimeter of the frame and seal assembly is encapsulated with elastomeric material forming a seamless annular-shaped continuous gasket to provide a resilient peripheral gasket to facilitate easy assembly within the door frame and further provide a tight compressive fit within the door structure.

Specific embodiments are now described by way of example.

In the drawings:
Fig. 1 is a front elevation view of a first automobile door glass cassette embodying the invention, comprising a frame and seal assembly and a glass regulator assembly;
Fig. 2 is the structure shown in Fig. 1 with the glass regulator assembly removed;
Fig. 3 is a sectional view taken along line 3-3 in Fig. 2;
Fig. 4 is a sectional view taken along line 4-4 in Fig. 2;
Fig. 5 is a sectional view taken along 5-5 in Fig. 2;
Fig. 6 is a sectional view taken along line 6-6 in Fig. 2;
Fig. 7 is a front elevation assembly view of the glass regulator assembly shown in Fig. 1;
Fig. 8 is a front elevation assembly view of the door glass cassette including the glass regulator assembly shown in Fig. 1 installed in a door frame;
Fig. 9 is a front elevation view of a second automobile door glass cassette embodying the invention, comprising a frame and seal assembly and a glass regulator assembly;
Fig. 10 is the structure shown in Fig. 9 with the glass regulator assembly removed;
Fig. 11 is a sectional view taken along line 11-11 in Fig. 10;
Fig. 12 is a sectional view taken along line 12-12 in Fig. 10;
Fig. 13 is a sectional view taken along line 13-13 in Fig. 10;
Fig. 14 is a sectional view taken along line 14-14 in Fig. 10; and
Fig. 15 is a front elevation assembly view, with portions broken away, of the door glass cassette including the glass regulator assembly shown in Fig. 9 installed in a door frame.

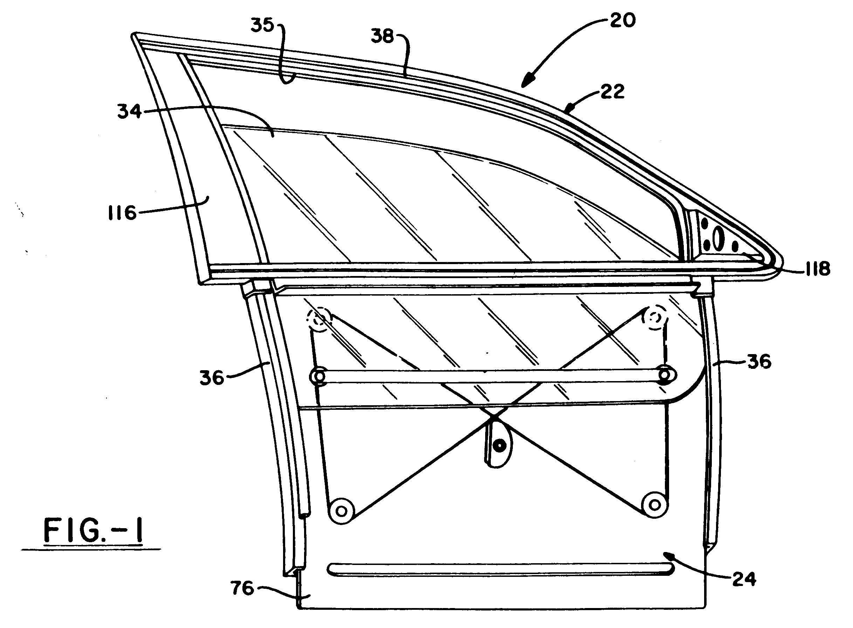

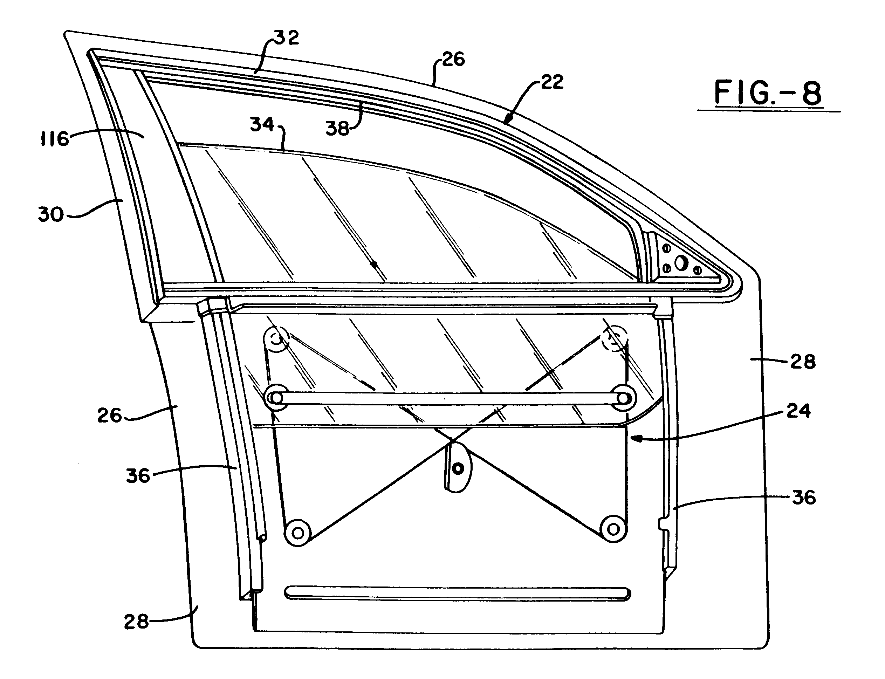

Referring now to the drawings wherein like reference characters indicate like parts, in a first embodiment of the present invention, an automobile door glass cassette generally indicated by the numeral 20 comprises a frame and seal assembly 22 generally in the form of a perimeter around a window opening and a glass regulator assembly 24 is shown in Figs. 1, 2 and 7. The door glass cassette 20 is adapted to be pre-assembled as a unit and readily fitted into place within the automobile door frame 26 comprising a door panel 28, a center post or B pillar 30, and a curved overhead molding or header 32, which collectively define a window or glass opening in the door structure, as shown in Fig. 8.

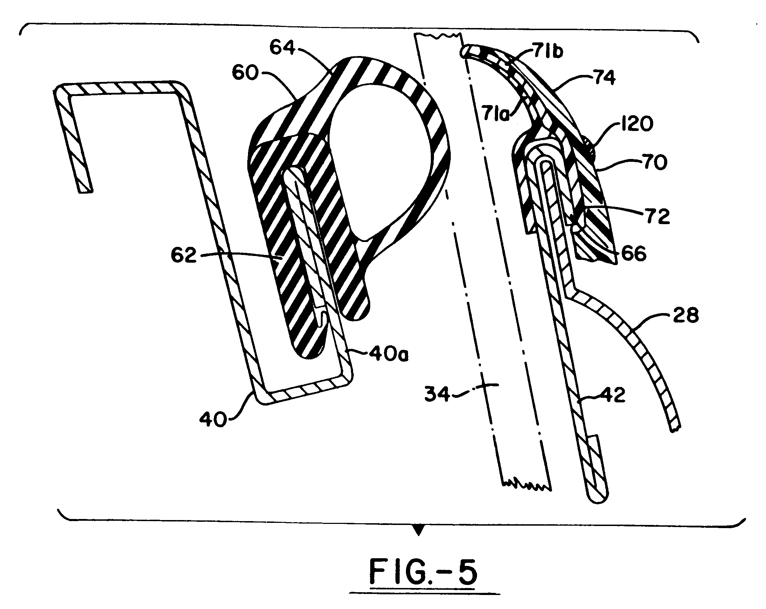

Fig. 1 is the door glass cassette 20 comprising the frame and seal assembly 22 with the glass regulator assembly 24 fitted within the door glass cassette and showing a window or glass pane 34 partially raised within the glass opening. By the term "glass" pane, it is meant to include other material used or useful in windows such as various plastics, usually transparent, and the like. The frame and seal assembly 22 is separable from the regulator assembly 24 and generally comprises a continuous U-shape channel and desirably constitutes a continuous perimeter frame 35. The perimeter channel frame comprises a pair of laterally spaced vertical side channels 36, and a top channel 38 to provide structural framework in which the window pane is operatively raised or lowered. Each side channel 36 has the open U-shape structure directed inwardly toward the glass opening while the top channel 38 has the open U-shape inverted and directed downwardly toward the glass opening. The lower dimension or belt line of the glass opening in the frame and seal assembly 22 is defined by a lateral guide opening means adapted to permit the glass pane 34 to pass freely between an inside lateral Z-member 40 and an outside lateral I-member 42 having a short vertical height which together define a narrow transverse opening laterally disposed between the Z-member 40 and I-member 42 as shown in Fig. 5. The members are generally made of metal such as steel but can be molded polymeric matrix composites such as fiber reinforced composites containing glass fibers, metal fibers, carbon fibers or polymeric fibers such as nylon or polyester and a binder matrix resin such as epoxy resin. Side U-channels 36, the top inverted U-channel 38 and the lateral guide members 40,42 collectively define the glass opening and each contain cooperative sealing elements of polymeric material adapted to seal the glass pane 34 on the inside and outside thereof when the glass pane is fully closed and to guide the glass pane with regard to its front leading edge and rear trailing edge as it is raised or lowered within the glass opening in the door glass cassette 20.

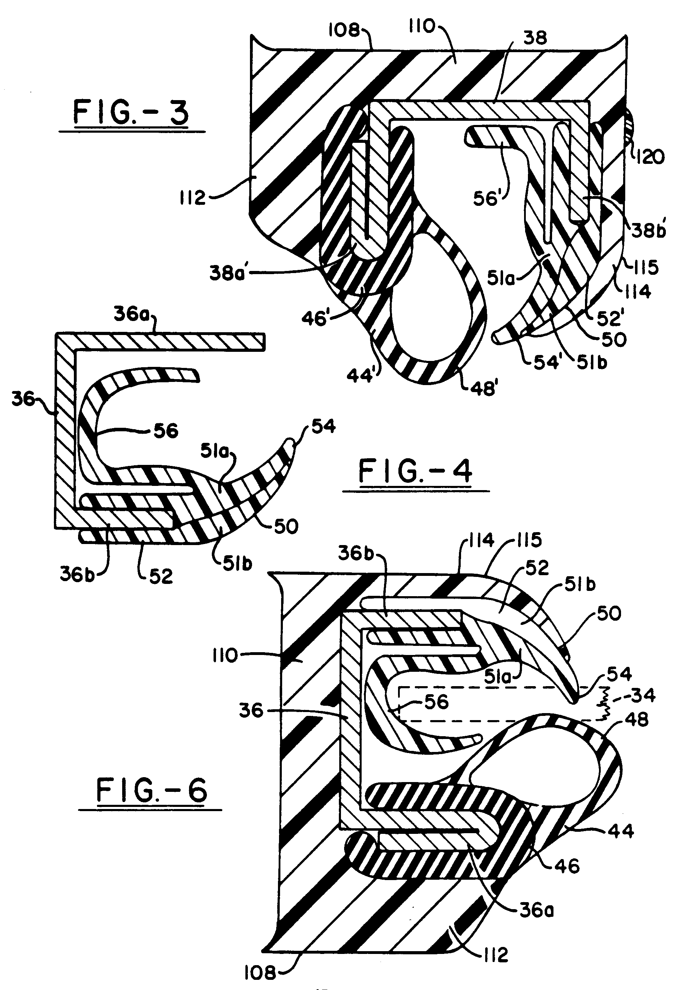

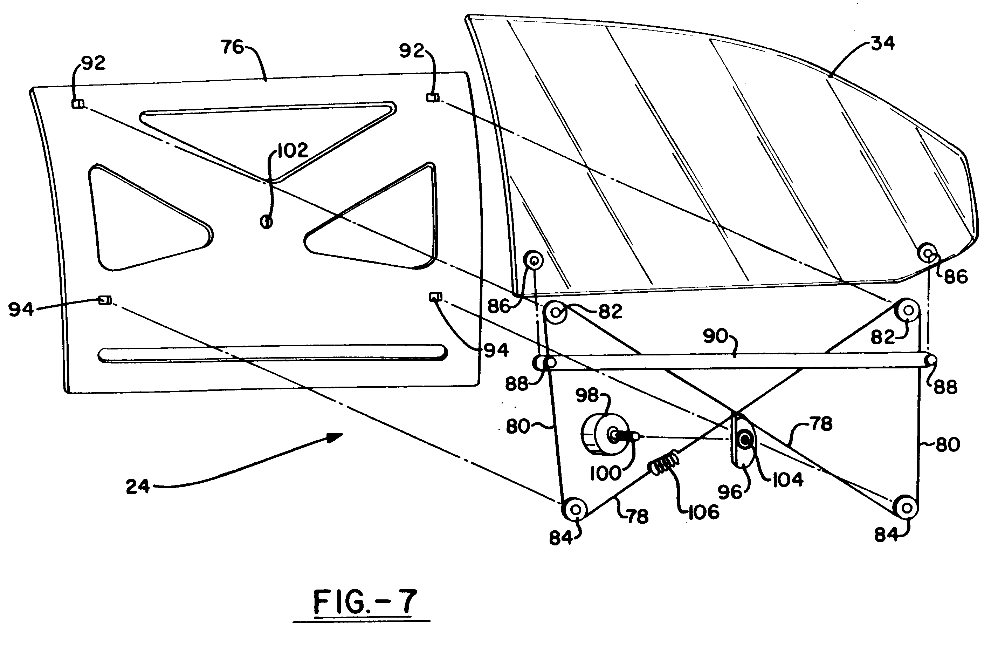

Referring to the U-shape side channels 36, as seen in Fig. 6, each channel 36 has an inside extension 36a and an outside extension 36b on which the sealing elements are secured in a cooperative mode to engage the glass pane 34. An interior seal 44 is secured to the inside extension 36a and comprises a solid, generally rigid member 46 having a recess slot securely engaging the extension 36a and a flexible hollow extension member 48 in the shape of a hollow-bulb secured to the solid member 46 and protruding outwardly toward the glass pane 34 where the flexible hollow bulb-like seal member 48 is adapted to engage and seal against the inside of the pane. The hollow bulb-like member 48, which may be solid or porous (e.g. sponge-like), is sufficiently resilient to hold its general protruding bulbous shape and yet is sufficiently flexible to slightly collapse internally while tightly and slidably engaging the glass pane 34. As shown in Fig. 4, the interior seal is generally not included below the window belt line or the lateral guide means comprising Z-member 40 and I-member 42. That is, the lower portion of channels 36a, 36b only require a glass run channel 56 in conjunction with an exterior seal 50 having a base member which encases outside channel extension 36b. Inside seal 44 is generally made from an elastomer such as EPDM of dual durometer where rigid member 46 has a high durometer hardness such as from about 80 to about 90 whereas the bulb-like protruding member 48 has a low durometer hardness such as from about 50 to about 70. Other suitable polymers include various thermoplastic olefins such as copolymers made from ethylene and propylene monomers having a high content of ethylene repeating units therein, polyethylene, and the like; various elastomers such as styrene-butadiene-styrene block copolymers, various styrene-butadiene rubbers, neoprene, various blends of polypropylene and EPDM (ethylene-propylene-diene-monomer) rubber, and the like.

An exterior seal 50 is secured to the outside extension 36b of the U-shape side channel 36 where the exterior seal 50 comprises a base member 52 with a recess secured to extension 36b and a resilient stem member 54 extending away from the base member 52 and curved slightly toward the glass pane 34. The stem member 54 terminates with a tapered distal end which is inwardly curved and resiliently and slidably engages and seals against the glass pane 34. Desirably, exterior seal 50 is coextruded and contains low friction inner portion 51A and a flexible outer portion 51B. The exterior seal 50 further contains a C-shape resilient, low friction channel 56 which acts as a glass run channel and is located between inside extension 36a and outside extension 36b of the side channel 36. The outer portion 51B and channel 56 preferably is a material of a tough but slippery weather resistant thermoplastic such as polypropylene, polyvinyl chloride, and ionomer resins such as surlyn, and various thermoplastic olefins such as various physical blends of polyethylene and polypropylene, and the like, whereas inner portion 51A is a flexible member such as a thermoplastic elastomer, for example various blends of polypropylene and EPDM, and the like. Glass run channel 56 generally extends the vertical length of each side U-channels 36 and is adapted to surround the peripheral front and rear edge of the glass pane 34 as well as provide a lateral stabilizing guide as the glass is raised and lowered. Both side U-channels 36 generally contain the same combination of sealing elements.

The inverted U-shape, top channel portion, as shown in Fig. 3, has sealing members which are essentially identical to the side channel sealing members with said description thereof being hereby fully incorporated by reference and preferably is a continuous extension thereof. Thus, top U-channel portion 38 contains an inverted inside extension 38a' and outside extension 38b' extending downwardly and defining the inverted U-shape construction. Similarly, interior seal 44' is secured to inside vertical extension 38a' and comprises a solid, generally rigid member 46' having a recess slot which securely engages extension 38a' and a flexible hollow extension member 48' which is adapted to engage and seal against the inside of glass pane 34. Exterior seal 50' comprises a base member 52' with a recess secured to vertical extension 38b' and a resilient stem member 54' which resiliently and slidably engages the outside of glass pane 34. Seat 56 which is an integral part of exterior seal 50' resides within the uppermost portion of U-channel 38 and is contacted by glass pane 34 upon full closure thereof. The portions of the seal depicted in Fig. 3 engage the upper horizontal portion of the glass pane only when it is in a closed position and secures a tight weather-proof seal.

As noted, the lower end of the glass opening is formed by the lateral channel guide means comprising the transversely spaced inside Z-member 40 and outside I-member 42 which are welded or otherwise secured laterally between and to the vertical side U-channels 36,36. The inside Z-member 40 contains an inside upright extension 40a fitted with an interior belt line seal 60 containing rigid base member 62 secured to extension 40a and an outwardly directed flexible hollow bulb 64, which are essentially of the same construction as described for the interior seal 44 secured to the side U-channels 36. The outside I-member 42 contains an upwardly extending structure terminating in an inverted J-structure 66 adapted to overlap the adjacent edge of the door panel 28. The inverted J-structure 66 is fitted with a resilient exterior belt line seal 70 comprising a base member 72 secured to the inverted J-structure 66 and an upwardly directed tapered stem 74 curved slightly inwardly toward the glass pane 34 and adapted to engage and seal the outside surface of the glass pane 34. The exterior belt line seal 70 contains an inner portion 71A and an outer portion 71B. The belt line seal 70, which is essentially of the same construction as exterior seal 50 with said description thereof being hereby fully incorporated by references, is secured to the vertical U-channels 36. Thus, the interior belt line seal 60 and the exterior belt line seal 70 cooperate to engage and seal the interior and exterior surfaces respectively of the glass pane 34 passing between the lateral channel guide means defined by the Z-member 40 and I-member 42 and effect a good weather seal therewith. Moreover, the belt line exterior seal 70 can have a cosmetic covering (not shown) thereon such as a suitable plastic, for example, polyurethane, and can be color coordinated with the vehicle.

Referring now to the glass regulator assembly 24 for raising and lowering the glass pane 34 within the automobile door, as best seen in Fig. 1 the regulator assembly 24 comprises the glass pane 34, a back mounting plate 76 which may be integral with U-shape channels 36, an X-pulley cable system operative to raise and lower the glass pane 34, and an actuating means for operating the cable system. The cable system as shown in Fig. 7 comprises a continuous cable or belt having internal criss-cross members 78,78 and laterally spaced vertical run members 80,80 engaging a pair of similarly spaced upper pulley wheels 82 and lower pulley wheels 84 where the vertical cable members 80,80 simultaneously advance upwardly or retract downwardly. At the lower periphery of glass pane 34, a pair of laterally spaced grommets 86,86 are adapted to be secured to the generally vertically orientated cable members 80,80 by a fastening means 88,88 secured to the vertical members 80,80. Optionally, a lateral stabilizing bar 90 is secured between the fastening means 88,88 to maintain the lateral distance between the vertical members 80,80 in addition to equalizing strain and supporting the glass pane 34. Lateral stabilizing bar 90 is approximately horizontal but can be skewed somewhat to accommodate the specific glass pane 34 configuration. The upper pulley wheels 82,82 and the lower pulley wheels 84,84 are operatively secured to the back mounting plate 76 by way of matching holes 92,92 and 94,94, respectively, located near the four corners of the mounting plate 76 and secured by bolt means or the like. At the center of the X-cable system where the internal members 78,78 criss-cross, a drive means 96 is attached to the end points of criss-cross members 78,78 to provide the coordinated simultaneous upward or downward movement of the vertical members 80,80. This may be conventional.

Drive means 96 is attached to a window glass crank, not shown, or optionally to drive shaft 100 of an electric motor 98. The motor 98 is secured to the backside of the mounting plate 76 by bolts secured through a plurality of bolt holes surrounding a central opening 102 adapted to permit the drive shaft 100 to pass through and be secured to the cam means 96 on the front side of the mounting plate 76.

Upon rotation of the drive shaft 100, the glass pane 34 moves upwardly or downwardly in conjunction with the vertical members 80,80. In order to prevent the glass pane 34 from freely dropping while lowering the glass pane 34, a ratchet type spring mechanism 104 is mounted on the upper part of the back mounting plate 76. The ratchet spring mechanism 104 permits the glass pane 34 to be raised unimpeded but tension in the spring is activated upon the glass pane 34 being lowered to prevent the same from falling freely. In the operation of the X-cable system, the laterally spaced vertical members 80,80 follow the path of the glass pane 34. If the vertical glass run channels are not straight but curved, the vertical members 80,80 will not maintain a straight vertical line but instead will following the curvature of the glass run channel 36. Hence, additional cable length is required upon raising and lowering the glass pane 34 and this is provided by a tension spring means 106 located within the cable system.

The glass regulator assembly can be preassembled and then attached to the frame and seal assembly 22 by welding or otherwise securing the back mounting plate 76 to the laterally spaced side U-channels 36,36 at the lower section of the frame and seal assembly 22. The back mounting plate 76 remains stationary relative to the frame and seal assembly 22 while the glass pane 34 is operative to be raised or lowered within the vertical side U-channels 36,36 of the frame and seal assembly 22. Thus, the frame and seal assembly 22 and glass regulator assembly 24 are secured together to provide an integral unitary cassette construction comprising the automobile door glass cassette 20.

The assembled door glass cassette 20 comprising the frame and seal assembly 22 and the glass regulator assembly 24 operatively secured together is encapsulated with a peripheral gasket of resilient elastomeric material to provide a continuous gasket 108 on the outside perimeter of the frame assembly 22. When on the exterior of the frame assembly, the gasket 108 provides a cosmetic covering. The elastomeric gasket 108 is particularly adapted to facilitate an easy snap-in procedure on an assembly line for installing the door glass cassette 20 within an automobile door structure 26. The peripheral elastomeric gasket 108 further provides tight alignment within the door structure 26, a crack-free integral seal, as well as noise reduction of the wind passing thereover.

The structure of the elastomeric gasket means is best seen in Fig. 6 with respect to the vertical side U-channels 36,36 and in Fig. 3 with respect to the top channel 38. Fig. 6 is a cross-sectional view showing a horizontal cross-section view of the frame and seal assembly 22. In Fig. 6, the gasket 108 integrally comprises an enlarged base section 110 secured to the backside or base part of U-channel 36, an internal section 112 encasing most of the otherwise exposed exterior surface of the rigid member 46 of the interior seal 44, and a narrowed exterior section 114 encasing most of the distal end 54 of the base member 52 of the external seal 50. In a similar manner, Fig. 3 illustrates a vertical cross-section of the top U-channel 38. The gasket 108 similarly comprises an integral construction having the base section 110 secured to the backside of the base of the inverted top U-channel 38, an internal section 112 and a narrowed external section 114. Thus, the gasket means 108 substantially encapsulates the side U-channels 36,36 and the top U-channel 38 in such a manner as to provide an integral frame and seal assembly 22 which is especially useful in assembling the door glass cassette 20 within the automobile door structure 26. The base 110 and internal 112 sections provide a right angle gasket of the necessary elastomeric thickness to facilitate sliding insertion into the door structure 26 and provide a compressive engagement therewith. If desired, a plastic trim strip comprising a mold strip 121, as shown in Figs. 3 and 5, can be added to stem member 54 of the exterior seal 50 for purposes of styling. Gasket material 108 can be a semi-rigid, resilient elastomeric material such as generally a thermoset polyurethane. Such materials are well known to the art and to the literature. The peripheral elastomeric gasket 108 is applied to the upper perimeter of the frame structure 22 but typically not below the belt line Z-member and I-member unless desired. The upper portion of the window frame and seal assembly 22 as from the belt line to top channel 38 can be placed in a perimeter mold having an interior cavity to accommodate the desired structure of the gasket 108 to be formed. Liquid polyurethane can be injected into the perimeter mold to encapsulate the backside of the respective U-channels 36,36,38 as well as partially encapsulate portions of the interior seals 44,44,60 and exterior seals 50,50,70 as previously described. The liquid polyurethane is then cured under heat to produce a resilient solid thermoset polyurethane gasket 108. Generally, gasket 108 is formed by reaction injection molding compounds (i.e., RIM) such as various polyesters, various polysulfides, various nylons, and the like. Such polymers are known to the art as well as to the literature. The belt line channel means formed by the transversely spaced Z-member and I-member are also generally encased with elastomeric material. The resulting elastomeric encapsulated and integral automobile door glass cassette 20 is easily and quickly slipped or installed into an automobile door structure 26 during assembly.

An important preferred feature of the invention is that the offset from the exterior surface 115 of exterior gasket section 114 to the exterior surface of the window pane 34 is generally very small and can be of the order of from about 3 millimeters to about 6 millimeters and in the present embodiment is approximately 4 millimeters. Such small offset distances are provided by the integral frame and seal assembly 22 which permits the window pane 34 to reside in glass run channel 56 in close proximity to exterior seal 52. The small offset exists not only with regard to the exterior belt line seal 70, but also with regard to exterior seal 50 which exists in the header portion of the window as well as the generally vertical side channels and thus provides an entire frame and seal assembly 22 which has very low wind resistance from an aerodynamic standpoint in association with glass pane 34. An aesthetic, clean-finish window is thus provided which is also very desirous from a styling standpoint.

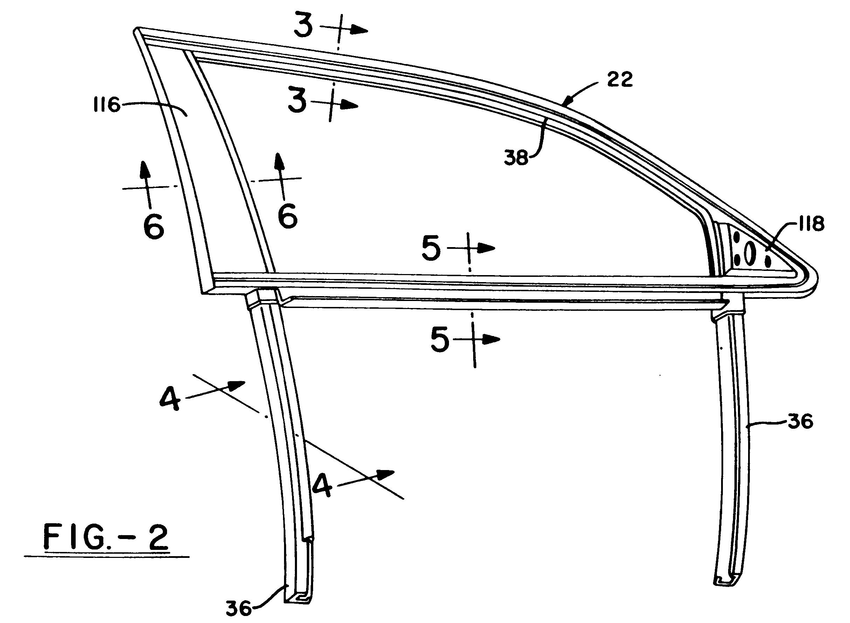

In the embodiment shown in Figs. 1 and 2, the encapsulated frame and seal structure 22 can further include side panels on either side of the glass opening. The left or rearward panel in the drawings is shown as an elongated vertical panel 116 while the right or forward panel comprises a triangular mirror panel 118. Both panels 116, 118 comprise a polymer base such as polyurethane connected to the respective U-channel 36, whereupon both the vertical panel 116 and the mirror panel 118 can be encapsulated with elastomeric material within appropriate die cavities provided in connection with the perimeter mold for curing the elastomeric material.

The cassette-like structure 20 described can be simply slipped into an existing car door structure 26 and attached thereto by snapping the top portion, as well as the side portions, of the encapsulated frame and seal structure 22 into place and securing the various portion with plastic rivets or the like having unidirectional flanges thereon. Alternatively, adhesives or liquid seals can be utilized.

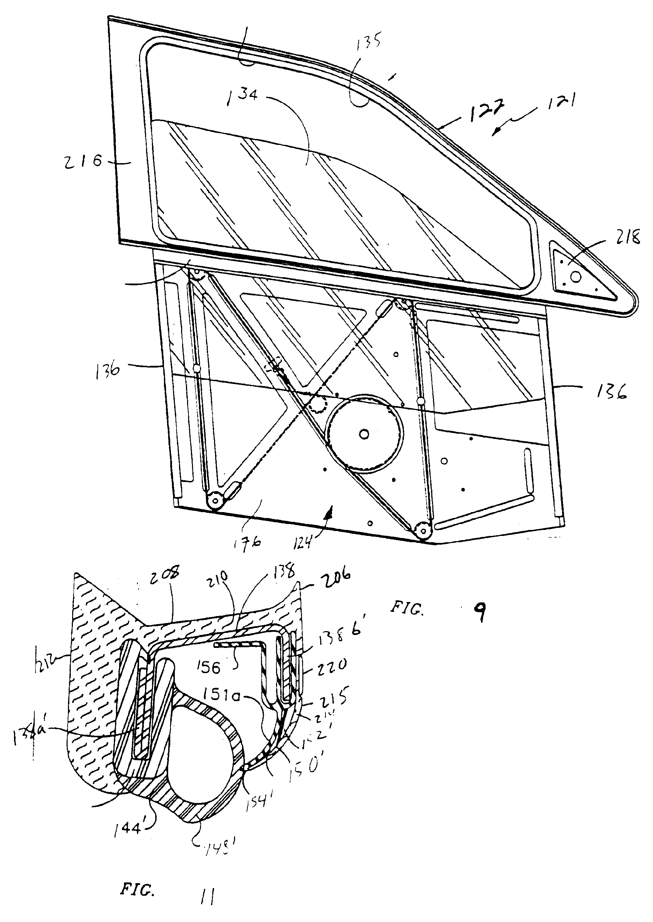

In a second embodiment of the present invention, an automobile door glass cassette generally indicated by the numeral 121 comprises a frame and seal assembly 122 generally in the form of a perimeter around a window opening and a glass regulator assembly 124, as shown in Figs. 9, 10 and 15. The door glass cassette 121 is adapted to be pre-assembled as a unit and readily fitted into place within an automobile door frame 126 comprising a door panel 128, a center post or B pillar 130 and a curved overhead molding or header 132, which collectively define a window or glass opening in the door structure as shown in Fig. 15.

Fig. 9 shows the door glass cassette 121, comprising the frame and seal assembly 122 with the glass regulator assembly 124 fitted within the door glass cassette and showing a window or glass pane 134 partially raised within the glass opening. By the term "glass" pane, it is meant to include other material used or useful in windows such as various plastics, usually transparent, and the like. The frame and seal assembly 122 generally comprises a continuous curvilinear-shaped and preferably U-shaped channel and desirably constitutes a continuous perimeter frame 135. The perimeter channel frame comprises a pair of laterally spaced vertical side channels 136, and a top channel 138 to provide structural framework in which the window pane is operatively raised or lowered. Each side channel 136 has the open U-shaped structure directed inwardly toward the glass opening while the top channel 138 has the open U-shape inverted and directed downwardly towards the glass opening. The lower dimension or belt line of the glass opening in the frame and seal assembly 122 is defined by a lateral guide opening means adapted to permit the glass pane 134 to pass freely between an inside lateral Z-member 140 and an outside lateral I-member 142 having a short vertical height which together define a narrow transverse opening laterally disposed between the Z-member 140 and I-member 142 as shown in Fig. 13. The members are generally made of metal such as steel but can be molded polymeric matrix composites such as fiber reinforced composites containing glass fibers, metal fibers, carbon fibers, or polymeric fibers such as nylon or polyester and a binder matrix resin such as epoxy resin. Side U-channels 136, the top inverted U-channel 138 and the lateral guide members 140 and 142, collectively define the glass opening and each contain cooperative sealing elements of polymeric material adapted to seal the glass pane 134 on the inside and outside thereof when the glass pane is fully closed and to guide the glass pane with regard to its front leading edge and rear trailing edge as it is raised or lower within the glass opening and in the door glass cassette 121.

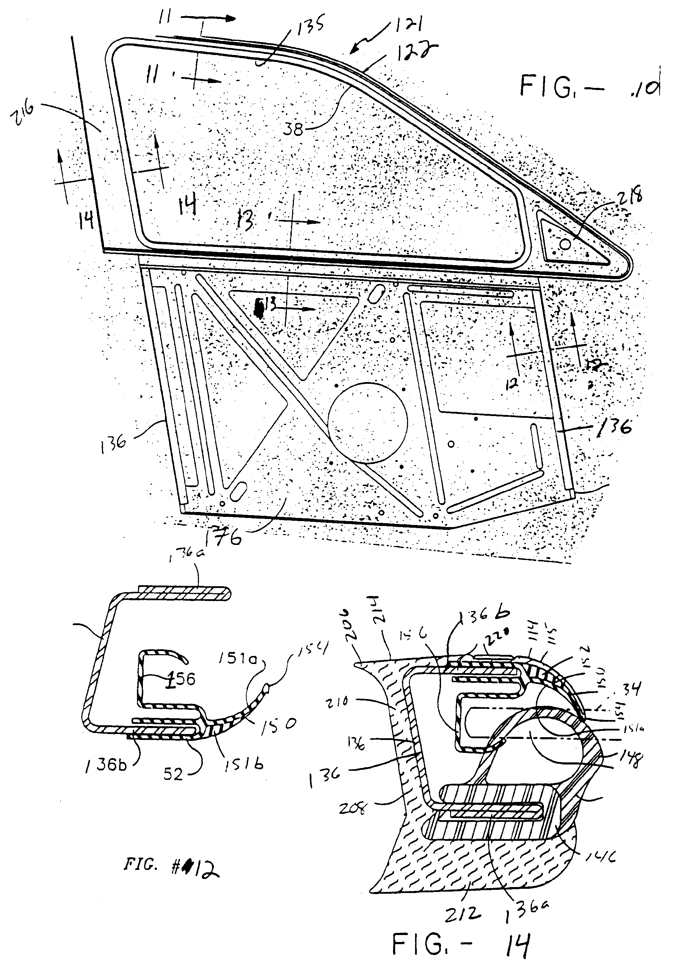

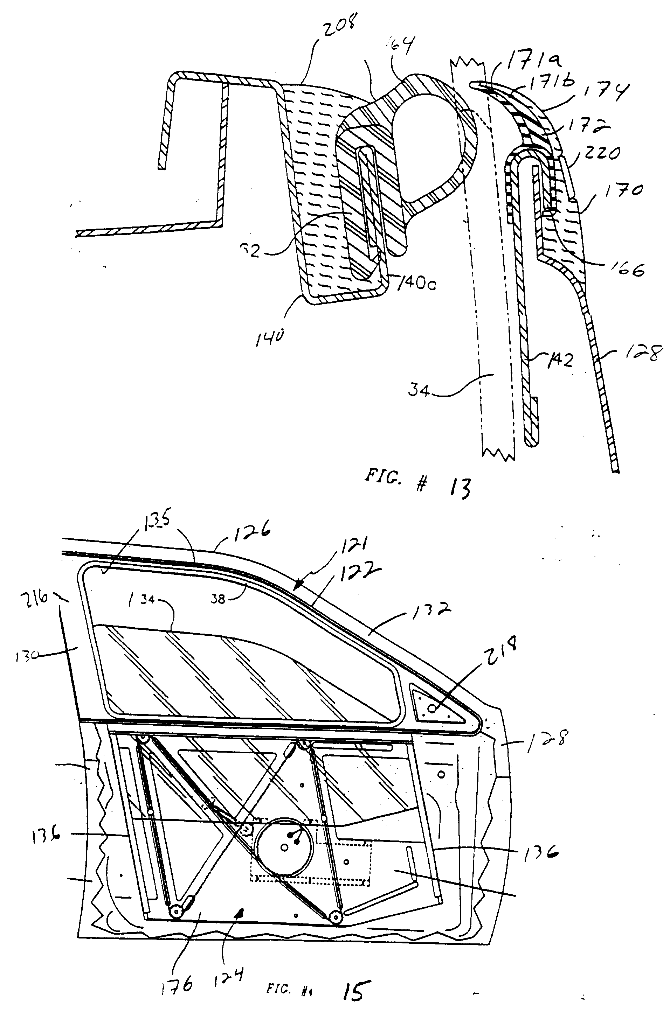

Referring to the U-shaped side channels 136 as seen in Fig. 14, each channel 136 has an inside extension 136a and an outside extension 136b on which the sealing elements are secured in a cooperative mode to engage the glass pane 134. An interior seal 144 is secured to the inside extension 136a and comprises a solid, generally rigid member 146 having a recess slot securely engaging the extension 136a and a flexible hollow extension member 148 in the shape of a hollow-bulb secured to the solid member 146 and protruding outwardly toward the glass pane 134 where the flexible hollow bulb-like seal member 148 is adapted to engage and seal against the inside of the pane. The hollow bulb-like member 148, which may be solid or porous, e.g. sponge-like, is sufficiently resilient to hold its protruding bulbous shape and yet is sufficiently flexible to slightly collapse internally while tightly and slidably engaging the glass pane 134. As shown in Fig. 12, the interior seal is generally not included below the window belt line or the lateral guide means comprising Z-member 140 and I-member 142. That is, the lower portion of channels 136a and 136b only require a glass run channel 156 in conjunction with an exterior seal 150 having a base member which encases outside channel extension 136b. Inside seal 144 is generally made from an elastomer such as EPDM of dual durometer where rigid member 146 has a high durometer hardness such as from about 80 to about 90 whereas the bulb-like protruding member 148 has a low durometer hardness such as from about 50 to about 70. Other suitable polymers include various thermoplastic olefins such as copolymers made from ethylene and propylene monomers having a high content of ethylene repeating units therein, polyethylene, and the like; various elastomers such as styrene-butadiene-styrene block copolymers, various styrene-butadiene rubbers, neoprene, various blends of polypropylene and EPDM (ethylene-propylene-diene-monomer) rubber, and the like.

An exterior seal 150 is secured to the outside extension 136b of the U-shaped side channel 136 where the exterior seal 150 comprises a base member 152 with a recess secured to extension 136b and a resilient stem member 154 extending away from the base member 152 and curved slightly toward the glass pane 134. The stem member 154 terminates with a tapered distal end which is inwardly curved and resiliently and slidably engages and seals against the glass pane 134. Desirably, exterior seal 150 is coextruded and contains low friction inner portion 151a and a flexible outer portion 151b. The exterior seal 150 further contains a C-shaped resilient, low friction channel 156 which acts as a glass run channel and is located between inside extension 136a and outside extension 136b of the side channel 136. The outer portion 151b and channel 156 preferably is a material of a tough but slippery weather-resistant thermoplastic such as polypropylene, polyvinyl chloride and ionomer resins such as surlyn, and various thermoplastic olefins such as various physical blends of polyethylene and polypropylene, and the like, whereas inner portion 151a is a flexible member such as a thermoplastic elastomer, for example various blends of polypropylene and EPDM, and the like. Glass run channel 156 generally extends the vertical length of each side U-channels 136 and is adapted to surround the peripheral front and rear edge of the glass pane 134 as well as provide a lateral stabilizing guide as the glass is raised and lowered. Both side U-channels 136 generally contain the same combination of sealing elements.

The inverted U-shaped, top channel portion, as shown in Fig. 11, has sealing members which are essentially identical to the side channel sealing members with said description thereof being hereby fully incorporated by reference and preferably is a continuous extension thereof. Thus, top U-channel portion 138 contains an inverted inside extension 138a' and outside extension 138b' extending downwardly and defining the inverted U-shaped construction. Similarly, interior seal 144' is secured to inside vertical extension 138a' and comprises a solid, generally rigid member 146' having a recess slot which securely engages extension 138a' and a flexible hollow extension member 148' which is adapted to engage and seal against the inside of glass pane 134. Exterior seal 150' comprises a base member 152' with a recess secured to vertical extension 138b' and a resilient stem member 154' which resiliently and slidably engages the outside of glass pane 134. Seat 156, which is an integral part of exterior seal 150' resides within the uppermost portion of U-channel 138 and is contacted by glass pane 134 upon full closure thereof. The portions of the seal depicted in Fig. 11 engage the upper horizontal portion of the glass pane only when it is in a closed position and secures a tight weather-proof seal.

As noted, the lower end of the glass opening is formed by the lateral channel guide means comprising the transversely spaced Z-member 140 and outside I-member 142 which are welded or otherwise secured laterally between and to the vertical side U-channels 136, 136. The inside Z-member 140 contains an inside upright extension 140a fitted with an interior belt line seal 160 containing rigid base member 162 secured to extension 140a and an outwardly directed flexible hollow bulb 164, which are essentially of the same construction as described for the interior seal 144 secured to the side U-channels 136. The outside I-member 142 contains an upwardly extending structure terminating in an inverted J-structure 166 adapted to overlap the adjacent edge of the door panel 128. The inverted J-structure 166 is fitted with a resilient exterior belt line seal 170 comprising a base member 172 secured to the inverted J-structure 166 and an upwardly directed tapered stem 174 curved slightly inwardly toward the glass pane 134 and adapted to engage and seal the outside surface of the glass pane 134. The exterior belt line seal 170 contains an inner portion 171a and an outer portion 171b. The belt line seal 170, which is essentially of the same construction as exterior seal 150 with said description thereof being hereby fully incorporated by reference, is secured to the vertical U-channels 136. Thus, the interior belt line seal 160 and the exterior belt line seal 170 cooperate to engage and seal the interior and exterior surfaces, respectively, of the glass pane 134 passing between the lateral channel guide means defined by the Z-member 140 and I-member 142 and effect a good weather therewith. Moreover, the belt line exterior seal 170 can have a cosmetic covering (not shown) thereon such as a suitable plastic, for example, polyurethane, and can be color coordinated with the vehicle.

Glass regulator assembly 124 can be preassembled and then attached to the frame and seal assembly 122 by welding or otherwise securing a back mounting plate 176 to the laterally spaced side U-channels 136, 136 at the lower section of the frame and seal assembly 122. The back mounting plate 176 remains stationary relative to the frame and seal assembly 122 while the glass pane 134 is operative to be raised or lowered within the vertical side U-channels 136, 136 of the frame and seal assembly 122. Thus, the frame and seal assembly 122 and glass regulator assembly 124 are secured together to provide an integral unitary cassette construction comprising the automobile door glass cassette 121. It is understood that any suitable conventional regulator assembly may be utilized in the cassette, so long as such glass regulator assembly can be secured to frame and seal assembly 122 to provide the integral unitary cassette construction.

The assembled door glass cassette 121 comprising the frame and seal assembly 122 and the glass regulator assembly 124 operatively secured together, is encapsulated with a peripheral gasket of resilient elastomeric material to provide a continuous or seamless, generally annular-shaped gasket 208 on the outside perimeter of the frame assembly 122. When on the exterior of the frame assembly, the gasket 208 provides a cosmetic covering. The elastomeric gasket 208 is particularly adapted to facilitate an easy snap-in procedure on an assembly line for installing the door glass cassette 121 within an automobile door structure 126. The peripheral elastomeric gasket 208 further provides tight alignment within the door structure 126, a crack-free integral seal, as well as noise reduction of the wind passing thereover. More particularly, gasket 208 provides a continuous 360° seal which covers gaps between the individual window seals, and stamping or metal bending errors inherent in the window seal channels. Thus, gasket 208 lowers wind noise, water leakage, etc. Such a continuous gasket about the window opening also results in a door having improved aesthetics, and especially eliminates the unsightly overlapping and bulging seals near the lower front junction of the window seal, that is the mirror mount area, and the lower rear junction of the window, that is the lock area.

The structure of the elastomeric gasket means is best seen in Fig. 14 with respect to the vertical side U-channels 136, 136, and in Fig. 11 with respect to the top channel 138. Fig. 14 is a cross-sectional view showing a horizontal cross-section view of the frame and seal assembly 122. In Fig. 14, the gasket 208 integrally comprises an enlarged base section 210 secured to the back side or base part of U-channel 136, an internal section 212 encasing most of the otherwise exposed exterior surface of the rigid member 146 of the interior seal 144 and a narrowed exterior section 214 encasing most of the distal end 154 of the base member 152 of the external seal 150. In a similar manner, Fig. 11 illustrates a vertical cross-section of the top U-channel 138. The gasket 208 similarly comprises an integral construction having the base section 210 secured to the backside of the base of the inverted top U-channel 138, an internal section 212 and a narrowed external section 214.

In accordance with a preferred feature of the present invention, base section 210 of gasket 208, as shown in Figs. 11 and 14 includes a flange 206 designed to overlap the door frame of an automobile thus further reducing wind noise, etc. Flange 206 is generally aligned with and extends opposite from narrow external section 214 of gasket 208. It is understood that such a flange could be elongated, of a slightly different shape, etc., depending on the door frame with which it is used, without affecting the general concept.

Thus, the gasket 208 substantially encapsulates the side U-channels 136, 136 and the top U-channel 138 in such a manner as to provide an integral frame and seal assembly 122 which is especially useful in assembling the door glass cassette 121 within the automobile door structure 126. The base 210 and internal 212 sections provide a right-angle gasket of the necessary elastomer thickness to facilitate sliding insertion into the door structure 126 and provide a compressive engagement therewith. If desired, a plastic trim strip comprising a mold strip 220, as shown in Figs. 11 and 14, can be added to stem member 154 of the exterior seal 150 for purposes of styling. Gasket material 208 can be a semi-rigid, resilient elastomeric material such as generally a thermoset polyurethane. Such materials are well known to the art and to the literature. The peripheral elastomeric gasket 208 is applied to the upper perimeter of the frame structure 122 but typically not below the belt line Z-member and I-member unless desired. The upper portion of the window frame and seal assembly 122 as from the belt line to top channel 138 can be placed in a perimeter mold having an interior cavity to accommodate the desired structure of the gasket 208 to be formed. Liquid polyurethane can be injected into the perimeter mold to encapsulate the backside of the respective U-channels 136, 136, 138, as well as partially encapsulate portions of the interior seals 144, 144, 160 and exterior seals 150, 150, 170 as previously described. The liquid polyurethane is then cured under heat to produce a resilient solid thermoset polyurethane gasket 208. Generally, gasket 208 is formed by reaction injection molding compounds, i.e. RIM, such as various polyesters, various polysulfides, various nylons, and the like. Such polymers are known to the art as well as to the literature. The belt line channel means forms by the transversely spaced Z-member and I-member are also generally encased with elastomeric material. The resulting elastomeric encapsulated and integral automobile door glass cassette 121 is easily and quickly slipped or installed into an automobile door structure 126 during assembly.

The second embodiment provides the same features of small offset from the exterior surface as does the first embodiment, and side panels 216, 218 can be incorporated similarly. The second embodiment is also usable in the same way as described for the first.

Although the present invention has been described in relation to a door glass cassette for an automobile door, it is readily seen that the unit can be adapted to be used in any type of vehicle containing a window.

## Claims

1. A door window cassette (20) for fitting into a vehicle door structure, comprising a frame and seal assembly (22) with a window perimeter channel comprising two side channels (36) and a top channel (38) extending between them, said channels (36,38) carrying interior seals (44,44') and exterior seals (50,50') for sealingagainst a window against a window pane, characterised in that an external perimeter surface of the top and side channels (38,36) is surrounded by a peripheral gasket (110) of elastomeric material for sealing the cassette (20) into the vehicle door structure.

2. A door window cassette according to claim 1 in which the side and top channels have a substantially U-shaped section with respective inside extensions (36a,38a') on which the interior seals (44,44') are secured, and outside extensions (36b,38b') on which the exterior seals (50,50') are secured.

3. A door window cassette according to claim 1 or claim 2 in which the frame and seal assembly (22) comprises lateral guide means having spaced inner and outer lateral guides (40,42) extending between the side channels (36) and defining with the side and top channels a window opening, the space between the guides (40,42) providing for the raising and lowering of a window pane between them, and said guides carrying respectively an interior seal (60) and an exterior seal (70) for sealing against the window pane in use.

4. A door window cassette according to claim 3 in which each of the lateral guides (40,42) offers a respective upwardly-directed extension (40a,66) on which the respective seal (60,70) is secured.

5. A door window cassette according to claim 3 or claim 4 in which the side channels (36) extend downwardly beyond the lateral guides (40,42) to provide for guiding a window pane below the window opening.

6. A door window cassette according to any one of the preceding claims in which each exterior seal (50,50',70) comprises a base member (52,52',72) fitting to the respective part (36b,38b',66) of the perimeter channel and a tapered stem member (54,54',74) directed inwardly sufficiently to seal in use against an outside window pane surface.

7. A door window cassette according to any one of the preceding claims in which each interior seal (44,44',60) comprises a relatively hard base member (46,46',62) fitting to the respective part (36a,38a',40a) of the perimeter channel and a relatively flexible member (48,48',64), preferably of a hollow bulb construction, extending from the base member outwardly sufficiently to seal in use against an inside window pane surface.

8. A door window cassette according to any one of the preceding claims in which at least a portion of either or both of the interior seal (44,44',60) and the exterior seal (50,50',70) is encased by the elastomeric peripheral gasket (110).

9. A door window cassette according to any one of the preceding claims in which the frame and seal assembly (22) comprises a glass run channel seal (56,56') in each side channel (36) and preferably also in the top channel (38), between the interior and exterior seals, for engagement by a window pane edge.

10. A door window cassette according to any one of the preceding claims, further comprising a window pane (34) and means (24) for raising and lowering the window pane in the cassette (20) between the side channels (36).

11. A door window cassette according to claim 10 in which the raising and lowering means comprise
a mounting plate (76);
cable means mounted on the mounting plate (76) to run in a criss-cross pattern with spaced vertical run portions (80) engaging a window pane (34) and crossing central portions (78) between them, and
actuator means on the mounting plate (76) for driving the cable means to raise or lower the window pane (34).

12. A door window cassette according to claim 10 or claim 11 in which the raising and lowering means (24) are mounted between downward extensions of the side channels (36).

13. A door window cassette according to any one of the preceding claims in which the side channels (36) and the top channel (38) are curved.

14. A door window cassette according to any one of claims 3 to 5 in which the inner lateral guide (40) has a Z-section and the inner lateral guide (42) has a I-section.

## Patentansprüche

1. Türfensterkassette (20) zum Einpassen in eine Fahrzeugtürkonstruktion, die eine Rahmen- und Abdichtungsanordnung (22) mit einem Fensterumfangskanal umfaßt, der zwei seitliche Kanäle (36) und einen sich dazwischen erstreckenden oberen Kanal (38) umfaßt, wobei die genannten Kanäle (36,38) innere Dichtungen (44,44') und äußere Dichtungen (50,50') zum Abdichten gegen eine Fensterscheibe tragen, dadurch gekennzeichnet, daß eine äußere Umfangsoberfläche des oberen und der seitlichen Kanäle (38,36) von einer peripheren Dichtung (110) aus Elastomermaterial zum dichten Einfügen der Kassette (20) in die Fahrzeugtürkonstruktion umgeben ist.

2. Türfensterkassette nach Anspruch 1, bei der die seitlichen und der obere Kanal einen im wesentlichen U-förmigen Querschnitt mit jeweiligen inneren Fortsätzen (36a,38a'), an denen die inneren Dichtungen (44,44') befestigt sind, und äußeren Fortsätzen (36b,38b'), an denen die äußeren Dichtungen (50,50') befestigt sind, aufweisen.

3. Türfensterkassette nach Anspruch 1 oder 2, bei der die Rahmen- und Abdichtungsanordnung (22) laterale Führungseinrichtungen mit beabstandeten inneren und äußeren lateralen Führungen (40,42) umfaßt, die sich zwischen den Seitenkanälen (36) erstrecken und mit den seitlichen und dem oberen Kanal eine Fensteröffnung begrenzen, wobei der Raum zwischen den Führungen (40,42) das Heben und Senken einer Fensterscheibe dazwischen ermöglicht und die genannten Führungen jeweils eine innere Dichtung (60) und eine äußere Dichtung (70) zum Abdichten gegen die Fensterscheibe im Betrieb tragen.

4. Türfensterkassette nach Anspruch 3, bei der jede der lateralen Führungen (40,42) einen jeweils nach oben gerichteten Fortsatz (40a,66) aufweist, auf dem die jeweilige Dichtung (60,70) befestigt ist.

5. Türfensterkassette nach Anspruch 3 oder 4, bei der die seitlichen Kanäle (36) sich über die lateralen Führungen (40,42) hinaus nach unten erstrecken, sodaß für die Führung einer Fensterscheibe unterhalb der Fensteröffnung gesorgt ist.

6. Türfensterkassette nach einem der vorhergehenden Ansprüche, bei der jede äußere Dichtung (50,50',70) ein Basiselement (52,52',72), das zum jeweiligen Teil (36b,38b',66) des Umfangskanals paßt, sowie ein sich verjüngendes Stielelement (54,54',74) umfaßt, das ausreichend nach innen gerichtet ist, um im Betrieb gegen eine äußere Fensterscheibenoberfläche abzudichten.

7. Türfensterkassette nach einem der vorhergehenden Ansprüche, bei der jede innere Dichtung (44,44',60) ein relativ hartes Basiselement (46,46',62), das zum jeweiligen Teil (36a,38a',40a) des Umfangskanals paßt, und ein relativ flexibles Element (48,48',64), vorzugsweise in Hohlblasenkonstruktion, umfaßt, das sich vom Basiselement ausreichend nach außen erstreckt, um im Betrieb gegen eine innere Fensterscheibenoberfläche abzudichten.

8. Türfensterkassette nach einem der vorhergehenden Ansprüche, bei der zumindest ein Abschnitt von entweder der inneren Dichtung (44,44',60) oder der äußeren Dichtung (50,50',70) oder von beiden von der peripheren Elastomerdichtung (110) umschlossen ist.

9. Türfensterkassette nach einem der vorhergehenden Ansprüche, bei der die Rahmen- und Abdichtungsanordnung (22) in jedem seitlichen Kanal (36) und vorzugsweise auch im oberen Kanal (38) zwischen den inneren und äußeren Dichtungen eine Glaslaufkanaldichtung (56,56') zum Angriff an einen Fensterscheibenrand umfaßt.

10. Türfensterkassette nach einem der vorhergehenden Ansprüche, die weiters eine Fensterscheibe (34) und eine Einrichtung (24) zum Heben und Senken der Fensterscheibe in der Kassette (20) zwischen den seitlichen Kanälen (36) umfaßt.

11. Türfensterkassette nach Anspruch 10, bei der die Einrichtung zum Heben und Senken umfaßt:
eine Montageplatte (76);
eine auf der- Montageplatte (76) montierte Seileinrichtung, die im Zickzackmuster läuft, wobei beabstandete vertikale Laufabschnitte (80) an einer Fensterscheibe (34) angreifen und mittlere Abschnitte (78) dazwischen kreuzen, sowie
eine Betätigungseinrichtung auf der Montageplatte (76), um die Seileinrichtung zum Heben oder Senken der Fensterscheibe (34) zu betätigen.

12. Türfensterkassette nach Anspruch 10 oder 11, bei der die Einrichtung (24) zum Heben und Senken zwischen nach unten gerichteten Fortsätzen der seitlichen Kanäle (36) montiert ist.

13. Türfensterkassette nach einem der vorhergehenden Ansprüche, bei der die seitlichen Kanäle (36) und der obere Kanal (38) gekrümmt sind.

14. Türfensterkassette nach einem der Ansprüche 3 bis 5, bei der die innere laterale Führung (40) ein Z-Profil und die äußere laterale Führung (42) ein I-Profil aufweist.

## Revendications

1. Module de fenêtre pour porte (20) destiné à être adapté dans une structure de porte de véhicule, comprenant un ensemble de châssis et de joint d'étanchéité (22) avec un canal périphérique de fenêtre comprenant deux canaux latéraux (36) et un canal supérieur (38) s'étendant entre ceux-ci, lesdits canaux (36, 38) supportant des joints d'étanchéité intérieurs (44, 44') et des joints extérieurs (50, 50') pour rendre étanche une vitre, caractérisé en ce qu'une surface périphérique externe des canaux latéraux et supérieur (38, 36) est entourée par un joint d'étanchéité périphérique (110) en élastomère pour rendre étanche le module (20) dans la structure de porte de véhicule.

2. Module de fenêtre pour porte selon la revendication 1, dans lequel les canaux latéraux et supérieur ont une section sensiblement en forme de U avec des extensions internes respectives (36a, 38a') sur lesquelles les joints d'étanchéité intérieurs (44, 44') sont fixés, et des extensions externes (36b, 38b') sur lesquelles les joints d'étanchéité extérieures (50, 50') sont fixés.

3. Module de fenêtre pour porte selon la revendication 1 ou la revendication 2, dans lequel l'ensemble comprenant le châssis et le joint d'étanchéité (22) comprend des moyens de guidage latéraux présentant des guidages latéraux interne et externe espacés (40, 42) s'étendant entre les canaux latéraux (36) et définissant avec les canaux latéraux et supérieur une ouverture de fenêtre, l'espace entre les guidages (40, 42) permettant de remonter et d'abaisser une vitre entre ceux-ci, et lesdits guidages supportant respectivement un joint d'étanchéité intérieur (60) et un joint d'étanchéité extérieur (70) pour rendre étanche la vitre en cours d'utilisation.

4. Module de fenêtre pour porte selon la revendication 3, dans lequel chacun des guidages latéraux (40, 42) offre une extension respective dirigée vers le haut (40a, 66) sur laquelle est fixé le joint d'étanchéité respectif (60, 70).

5. Module de fenêtre pour porte selon la revendication 3 ou la revendication 4, dans lequel les canaux latéraux (36) s'étendent vers le bas au-delà des guidages latéraux (40, 42) afin de guider une vitre en dessous de l'ouverture de fenêtre.

6. Module de fenêtre pour porte selon l'une des revendications précédentes, dans lequel chaque joint d'étanchéité extérieur (50, 50', 70) comprend un élément de base (52, 52', 72) adapté à la partie respective (36b, 38b', 66) du canal périphérique et un élément de tige effilée (54, 54', 74) dirigé vers l'intérieur suffisamment pour établir une étanchéité, en cours d'utilisation, avec une surface externe de vitre.

7. Module de fenêtre pour porte selon l'une des revendications précédentes, dans lequel chaque joint d'étanchéité intérieur (44, 44', 60) comprend un élément de base relativement dur (46, 46', 62) adapté à la partie respective (36a, 38a', 40a) du canal périphérique et un élément relativement flexible (48, 48', 64) de préférence d'une construction en bulbe creux qui s'étend de l'élément de base suffisamment loin vers l'extérieur pour établir une étanchéité, en cours d'utilisation, avec une surface interne de vitre.

8. Module de fenêtre pour porte selon l'une des revendications précédentes, dans lequel au moins une partie de chacun ou des deux joints d'étanchéité intérieurs (44, 44', 60) et le joint d'étanchéité extérieur (50, 50', 70) est encapsulé par le joint d'étanchéité périphérique en élastomère (110).

9. Module de fenêtre pour porte selon l'une des revendications précédentes, dans lequel l'ensemble comprenant le châssis et le joint d'étanchéité (22) comprend un joint d'étanchéité de canal de coulissement de vitre (56, 56') dans chaque canal latéral (36) et de préférence également dans le canal supérieur (38), entre les joints d'étanchéité intérieur et extérieur, pour une mise en prise avec un bord de la vitre.

10. Module de fenêtre pour porte selon l'une des revendications précédentes, comprenant en outre une vitre (34) et un moyen (24) pour remonter et abaisser la vitre dans le module (20) entre les canaux latéraux (36).

11. Module de fenêtre pour porte selon la revendication 10, dans lequel le moyen servant à remonter et à abaisser comprend
une plaque de montage (76);
des moyens de câble montés sur la plaque de montage (76) pour s'étendre suivant un schéma croisé avec des portions de coulissement verticales espacées (80) venant en prise avec une vitre (34) et croisant des portions centrales (78) entre celles-ci, et
des moyens d'actionnement sur la plaque de montage (76) pour entraîner les moyens de câble afin de monter ou d'abaisser la vitre (34).

12. Module de fenêtre pour porte selon la revendication 10 ou la revendication 11, dans lequel les moyens servant à remonter et à abaisser (24) sont montés entre des extensions inférieures des canaux latéraux (36).

13. Module de fenêtre pour porte selon l'une des revendications précédentes, dans lequel les canaux latéraux (36) et le canal supérieur (38) sont courbés.

14. Module de fenêtre pour porte selon l'une des revendications 3 à 5, dans lequel le guidage latéral interne (40) a une section en Z et le guidage latéral interne (42) a une section en I.
